# EUROPEAN PATENT SPECIFICATION

(11) **EP 2 090 179 B1**
(45) Date of publication and mention of the grant of the patent: **10.08.2016**
(21) Application number: 07832234.4
(22) Date of filing: 21.11.2007
(51) Int. Cl.: A23L 29/244, A23L 29/20, A23L 19/00, A23G 3/42

(54) **MANNOOLIGOSACCHARIDE-CONTAINING FOOD COMPOSITION**
MANNOOLIGOSACCHARIDHALTIGE NAHRUNGSMITTELZUSAMMENSETZUNG
COMPOSITION ALIMENTAIRE CONTENANT UN MANO-OLIGOSACCHARIDE

(30) Priority: 21.11.2006 JP 2006314141
(43) Date of publication of application: 19.08.2009
(73) Proprietor: Fuji Oil Holdings Inc., Osaka 598-8540 (JP)
(72) Inventor: KANATANI, Hiroyuki, Tsukubamirai-shi Ibaraki 300-2436 (JP); YOKOMIZO, Futoshi, Izumisano-shi Osaka 598-8540 (JP)
(74) Representative: Boult Wade Tennant
(86) International application number: PCT/JP2007/072504
(87) International publication number: WO 2008/062813

(56) References cited:
- WO-A1-2006/036208
- WO-A1-2008/001769
- WO-A1-2008/001770
- WO-A2-00/53030
- JP-A- 07 322 849
- JP-A- 63 071 158
- JP-A- 2000 050 899
- JP-A- 2000 139 490
- KUSAKABE I ET AL: "PREPARATION OF BETA-1, 4-MANNOBIOSE FROM WHITE COPRA MEAL BY A MANNANASE FROM PENICILLIUM PURPUROGENUM", AGRICULTURAL AND BIOLOGICAL CHEMISTRY, JAPAN SOC. FOR BIOSCIENCE, BIOTECHNOLOGY AND AGROCHEM, TOKYO, JP, vol. 51, no. 10, 1 October 1987 (1987-10-01), pages 2825-2826, XP002974647, ISSN: 0002-1369
- RAGHAVENDRA S. ET AL.: 'Grinding characteristics and hydration properties of coconut residue: A source of dietary fiber' J. FOOD ENG. vol. 72, no. 3, 2006, pages 281 - 286, XP003022598
- TRINIDAD T.P. ET AL.: 'Glycaemic index of different coconut (Cocos nucifera)-flour products in normal and diabetic subjects' BR. J. NUTR. vol. 90, no. 3, 2003, pages 551 - 556, XP003022597
- BALASUBRAMANIAM K. ET AL.: 'Polysaccharides of the kernel of maturing and matured coconuts' JOURNAL OF FOOD SCIENCE vol. 41, no. 6, 1976, pages 1370 - 1373, XP003022599

## Description

### Technical Field

The present invention relates to a mannooligosaccharide-containing edible composition.

### Background Art

Coconut (coconut palm) is a crop utilized in many fields closely related to everyday life from food to daily commodities, and is prosperously cultivated in plantations in the tropics. In coconut, its fruit has a particularly high utility value and, for example, is utilized as a raw material for a rope and a carpet, as well as a raw material of food such as coconut oil and coconut powder.

The structure of coconut fruit is composed of a part of a thick husk and a part of a nut covered with a hard shell present inside of the husk. The husk is divided into an exocarp and a mesocarp, and is mainly composed of a fiber and a cork. On the other hand, the nut has a hard woody shell that protects an embryo present inside thereof, and the embryo is composed of endosperm containing much oil, and transparent endosperm juice. From the old time, in utilization of coconut fruit, copra (obtained by drying endosperm by sunshine or smoking) has been most important and in the majority, and it serves as a raw material of palm oil. From copra, coconut oil is collected in a yield of about 60 to 65%. However, in recent years, there have been many food and drink materials utilizing coconut fruit, and coconut fruit has been increasingly utilized as a raw material for a wide variety of food and drink in addition to a raw material of coconut oil. For example, coconut milk is prepared from endosperm of coconut fruit, coconut water is prepared from endosperm juice (fruit juice), and nata de coco is prepared from coconut water by fermentation.

Meanwhile, physiological functions possessed by a mannooligosaccharide such as β-1,4-mannobiose which is a compound formed by binding of D-mannoses through β-1,4-linkage have attracted attention in recent years. In the present invention, the mannooligosaccharide means an oligosaccharide obtained by polymerization of 2 to 10 mannose residues. Sugar chain parts of a glycoprotein present in our body are deeply involved in, for example, transmission of intercellular information and recognition of a foreign matter, and play very important roles in performing life activities. Sugar chains can be classified into several kinds according to the structures thereof, and a sugar chain in which a few mannoses are arranged is called, for example, a high mannose-type sugar chain or an oligomannose-type sugar chain. Thus, since mannose is an essential saccharide indispensable for a constitutional component of sugar chains in a living body, for example, utilization as a raw material of medicaments is expected (Patent Document 1, Patent Document 2). Further, it is also known that a mannooligosaccharide such as mannobiose has such a physiological effect as suppression of increase in peroxide lipid and promotion of mineral absorption (Patent Document 3, Patent Document 4), and that it is a substance of proliferating bifidobacteria (Patent Document 1). Thus, since a mannooligosaccharide is a very useful substance for maintaining health of a human being, it is demanded to develop a method for simply and effectively ingesting a mannooligosaccharide in everyday life.

As a method for preparing a mannooligosaccharide, there is a method for hydrolyzing a natural substance containing a large amount of mannan. For this, various methods have been proposed, for example, there are a method for producing a mannooligosaccharide by acid-degrading or enzyme-degrading glucomannan contained in konnyaku and galactomannan contained in guar gum (Patent Document 5), a method for producing mannobiose from copra meal by enzyme degradation (Patent Document 6), and a method for obtaining mannose and a mannooligosaccharide having a polymerization degree of mannose of 2 to 8 by hydrolyzing a coffee extraction residue (Patent Document 7).

However, since copra meal is a blackish blown livestock feed, it is hardly applicable to food, and it is essential to treat copra meal to separate and purify mannoologosaccharides. Further, since a mannooligosaccharide obtained from a coffee extraction residue as it is has coffee-like a color and a flavor, in order to make it widely usable in food, naturally, it is necessary to subject it to separation and purification treatment.

Therefore, in order to obtain a widely usable edible material so that a mannooligosaccharide can be simply and effectively ingested in everyday life, separation and purification treatment of saccharides, which is very troublesome and time-consuming, is required after hydrolysis of a natural product. This is problematic and the production cost becomes expensive.

Patent Document 1: JP 58-212780 A
Patent Document 2: JP 2003-316519 A
Patent Document 3: JP 2001-70410 A
Patent Document 4: JP 2001-117796 A
Patent Document 5: JP 63-49093 A
Patent Document 6: JP 11-18793 A
Patent Document 7: JP 2-200147 A
JP 2000139490 discloses a process for obtaining a mannooligosaccharide which includes purifying the mannooligosaccharide.
'Preparation of β-1, 4-Mannobiose from White Copra Meal' by a Mannanase from Penicillium Purpurogenum, Agric. Biol. Chem., 51 (10) 2825-2826, 1987 discloses a method for the preparation of mannobiose from white copra meal involving hydrolysis of the copra meal.

### Disclosure of the Invention

### Problem to be solved by the invention

An object of the present invention is to obtain an edible material which is widely usable by a simple method.

### Means for solving the problem

The present inventors have intensively studied to solve the above problem and, as a result, have directed their attention to defatted endosperm of coconut fruit, and have found that a white edible material having a good flavor which is widely usable can be obtained without particular separation and purification of a mannooligosaccharide by reacting endosperm with an enzyme having mannan degrading activity such as mannanase. Thus, the present invention has been completed.

That is, the gist of the present invention is: a method for producing 1) a mannooligosaccharide-containing edible composition comprising taking endosperm out of coconut fruit, grinding the endosperm to prepare slurry, subjecting the slurry to solid-liquid separation to obtain solid matter, and then either (i) defatting the solid matter until the fat and oil content becomes 1% by weight or less, and reacting the defatted solid matter so as to hydrolyze mannan contained therein; or ii) reacting the solid matter with a mannan-degrading enzyme which does not substantially have a lipase activity so as to hydrolyze mannan contained therein; wherein an edible composition is obtained without particular separation and purification of mannooligosaccharide, and wherein the mannooligosaccharide-containing edible composition comprises mannobiose in an amount of 10% by weight or more. The present disclosure also relates to a food which is obtainable by using the mannooligosaccharide-containing edible composition produced according to the method of 1).

### Effect of the invention

According to the present invention, an edible material which contains a mannooligosaccharide and is widely usable can be simply obtained by the method of the invention.

### Best Mode for Carrying Out the Invention

First, after nuts are taken out of harvested coconut fruits and cracked into halves, endosperms present inside of the testa are cleanly taken out with minimizing contamination of mesocarp (husks) as little as possible. Then, the endosperms are ground into slurry. A smaller particle size is better. For example, endosperms are preferably pulverized with a mixer, and the resultant is further ground with, for example, a millstone or a mill. Then, the resultant is filtered, and subjected to solid-liquid separation with centrifugation or the like to obtain solid matter. Since the solid matter thus obtained does not contain such a hard fiber that a human being hardly chews it, and has a very good flavor derived from coconut, it is very suitable for a human being to eat.

It is necessary in many cases that, before subjecting to hydrolysis treatment of mannan, the solid matter are sufficiently defatted in advance. While it is most preferred that the solid matter is completely defatted, suitably, the solid matter is defatted to such a degree that the content of remaining oil is preferably 1% by weight or less, further preferably 0.5% by weight or less. As a defatting method, generally, a solvent such as hexane is used and, when a solvent is used, it is preferred to sufficiently remove the solvent thereafter.

When defatting is insufficient, an unpleasant flavor is generated, which is not suitable for a human being to drink and eat at all. Then, the resultant cannot be utilized for a food. This is presumed that laurin butter peculiar to coconut is degraded to release lauric acid, thereby generating a soapy odor due to the hydrolysis treatment as described hereinafter.

This solid matter is subjected to treatment so as to hydrolyze mannan contained therein. The hydrolysis can be performed by using a mannan-degrading enzyme.

When hydrolysis is performed with an enzyme, the enzyme has mannan degrading activity such as mannanase which can act on mannan to release mannooligosaccharides. In addition, a commercially available enzyme preparation can be used, and examples thereof include enzyme preparations such as Sumizyme ACH, Sumizyme AC (both are trade name of Shin-Nihon Kagaku Kogyo. Further, since commercially available cellulases, and hemicellulases such as xylanase, pectinase and galactanase can degrade mannan, they can also be used. These enzyme preparations are commercially available as enzyme preparations for food. Since these preparations have been use for food, their safety has been established.

As the conditions for reacting an enzyme, any conditions employed in a normal enzymatic reaction can be used, and optimal conditions for a particular enzyme to be used can be appropriately selected. The amount of an enzyme to be reacted is not particularly limited, and can be such an amount that mannooligosaccharides are released. The amount depends on a specific activity of the enzyme and, for example, in case of mannanase is reacted, the amount is preferably 0.001 to 10% by weight, more preferably 0.05 to 5% by weight relative to the weight of a raw material to be treated. The reaction temperature can be such a temperature that the enzyme can react without inactivation and, in order to prevent rot by a microorganism as much as possible, a temperature range at which a microorganism is hardly proliferated is selected, preferably 40°C to 80°C, more preferably 50°C to 70°C. It is desirable that the reaction is performed under optimal pH conditions of the enzyme, and an acidic or weak acidic region of a pH 2 to 6 is preferable in order to prevent rot of a microorganism as with the reaction temperature. The reaction time depends on the amount of the enzyme used, and is preferably 3 to 48 hours from a view point of workability.

Usually, when the enzymatic reaction is performed under the conditions described above, a mannooligosaccharide-containing edible composition containing mannobiose as a main component in an amount of 10% by weight or more can be obtained from endosperms of coconut fruit.

As described above, even when hydrolysis treatment is performed with the enzyme, it is necessary in many cases that the solid matter obtained from endosperms of coconut fruit is sufficiently defatted. The present inventors have tested various commercially available mannan-degrading enzymes and, as a result, have recognized that the aforementioned unpleasant flavor is generated in many cases. This is considered that, even when hydrolyzed with the enzyme, fats and oils in a raw material are degraded with a small amount of lipase contained in a mannan-degrading enzyme. Therefore, when defatting is not performed, it is preferable to use a mannan-degrading enzyme which does not have a lipase activity. For this, purified or partially purified mannanase can be used. Since an operation for purifying an enzyme is troublesome and the production cost becomes expensive, it is not so practical. While to use an enzyme which does not substantially have a lipase activity as such is preferred, in such the case, a bacteria-derived enzyme is preferred. Examples thereof include Sumizyme GMA derived from *Bacillus subtilis.*

A composition containing mannooligosaccharides obtained by hydrolysis treatment is appropriately dried by a conventional drying method, and then it is used. Furthermore, by a subsequent extraction operation, only a soluble component can be easily obtained. Mannooligosaccharides are contained in this soluble component. According to a particular application purpose, suitable treatment is performed, the composition can be prepared and used in any form such as powders, granules, tablets, and the like.

The mannooligosaccharide-containing food composition obtained through the aforementioned steps can be utilized in a variety of foods including western confectionary. Further, since mannooligosaccharides can be ingested without difficulty in everyday life meal, it is expected that this greatly serves in our health.

### Examples

The following Comparative Examples, and Examples of the present invention will be explained the present invention in detail. In Examples, all the percents are by weight.

### (Comparative Example 1)

Endosperms were taken out from coconut fruits obtained from Philippine, washed, pulverized with a mixer, and the resultant was further ground with a colloid mill into slurry, and filtered to recover solid matter. The solid matter was dried and to 100 g of the dried solid matter (moisture 5.2%, oil content 9.6%) were added 0.8 g of Sumizyme ACH (manufactured by Shin-Nihon Kagaku Kogyo, galactomannanase activity, titer: 50,000 unit/g), an enzyme of *Aspergillus niger* origin, and 99.2 g of ion-exchanged water, and stirred and mixed to react them for 18 hours under the conditions of 50°C. After completion of the reaction, the reaction product was immediately dried with a hot air drier at 70°C, and a white powder containing mannooligosaccharides (18.3 (dry-base %) as β-1,4 mannobiose) was obtained. The mannose content thereof was 1.6%. When the resulting powder was assessed for a flavor, the considerable unpleasant flavor was generated, and it seemed that a human being could hardly eat the powder.

### (Example 1)

Next, 2-fold amount by weight of hexane was mixed with solid matter recovered from endosperms of coconut fruits according to the similar procedure as described above, and vigorously mixed for 30 minutes. To the residue recovered from filtration was added hexane once more, followed by stirring. When this procedure was repeated at a total of three times, the resulting residue could be defatted to such an extent that the remaining oil content was 0.28%. After defatting, hydrolysis treatment was performed using Sumizyme ACH as described above. After completion of the reaction, the resultant was dried with a hot air drier at 70°C to obtain a white powder (mannooligosaccharide-containing edible composition of the present invention) containing mannooligosaccharides (18.0% (dry-base) as β-1,4 mannobiose). The mannose content thereof was 2.5%. When a flavor of the resulting white powder was confirmed, the unpleasant flavor as described above was not felt at all, and the powder was suitable for drinking and eating. A water-soluble fraction of the white powder was subjected to ultrafiltration (Mw 10,000 cut), gel-filtered to obtain an oligosaccharide fraction and, when the composition was measured, mannosaccharides were 9.8%, disaccharides were 26.8%, trisaccharides were 7.3%, tetrasaccharides were 3.5%, and penta or higher saccharides were 5.3% (kinds of constituent sugars were not analyzed). Therefore, it was found that β-1,4 mannobiose was a main component.

### (Example 2)

To 100 g of solid matter (not defatted) obtained according to the same manner as that in Comparative Example 1 were added 0.8 g of Sumizyme GMA (manufactured by Shin-Nihon Kagaku Kogyo, galactomannanase activity, titer: 50,000), i.e. an enzyme different from the aforementioned enzyme, and an enzyme of *Bacillus subtilis* origin, and 99.2 g of ion-exchanged water, and stirred and mixed to react them for 18 hours under the conditions of 50°C. After completion of the reaction, the reaction product was immediately dried with a hot water drier at 70°C to obtain a white powder (mannooligosaccharide-containing edible composition of the present invention) containing mannooligosaccharides (11.2% (dry-base) as β-1,4 mannobiose). The mannose content thereof was 1.6%. When the resulting powder was assessed for a flavor, little unpleasant flavor was felt, and the powder could be eaten. The forgoing is summarized, and shown in Table 1.

**[Table 1]**

| | Presence or absence of defatting | Enzyme used | β-1,4 mannobiose content | Flavor assessment |
|---|---|---|---|---|
| Comparative Example 1 | No defatting | Sumizyme ACH | 18.3% | Unpleasant flavor. Unsuitable for drinking and eating. |
| Example 1 | Defatted | Sumizyme ACH | 18.0% | No unpleasant flavor was felt. |
| Example 2 | No defatting | Sumizyme GMA | 11.2% | No unpleasant flavor was felt. |

### (Comparative Example 2)

Solid matter obtained according to the same manner as that in Comparative Example 1 was defatted using hexane until the remaining oil content became 1.98% (Comparative Example 2), 0.97% (Example 3), and 0.47% (Example 4), respectively. When these were subjected to the enzymatic reaction using Sumizyme ACH-L according to the same manner as that in Comparative Example 1, powders containing mannooligosaccharides (18.2, 17.4 and 16.8% (dry-base), respectively, as β-1,4 mannobiose) were obtained, respectively. The mannose contents thereof were 2.3%, 1.4%, and 2.0%, respectively. When these powders were assessed for a flavor, slight unpleasant odor was felt from the powder having the remaining oil content of 1.98%, but no unpleasant odor was felt from powders having the remaining oil content of 0.97% and 0.47%. The forgoing is summarized, and shown in Table 2.

**[Table 2]**

| | Oil content remaining in raw material | Enzyme used | β-1,4 mannobiose content | Flavor assessment |
|---|---|---|---|---|
| Comparative Example 2 | 1.98% | Sumizyme ACH | 18.2% | Slight unpleasant flavor |
| Example 3 | 0.97% | Sumizyme ACH | 17.4% | Unpleasant flavor is not felt. |
| Example 4 | 0.47% | Sumizyme ACH | 16.8% | Unpleasant flavor is not felt. |

Then, Examples in which this mannooligosaccharide-containing edible composition is applied to drinks and foods will be described.

### (Example 5)

### (Process for producing coconut yogurt)

In a pan were charged 30 g of the mannooligosaccharide-containing edible composition, 30 g of a coconut powder, and 150 cc of water, and the pan was placed on weak fire to make a coconut cream. Into this were charged 100 cc of cow milk, 50 g of granulated sugar, and a 1/2 cup of commercially available plain yogurt and thoroughly mixed, and fire was distinguished. This was sufficiently cooled in a refrigerator, and served to eat, and a coconut yogurt containing mannooligosaccharide having a good flavor, of releasing a slight coconut flavor, could be prepared.

### (Example 6)

### (Process for producing coconut white ball-like cake)

Refined rice flour (70 g) and one large spoon of a sugar were kneaded to a degree of softness of an earlobe with being gradually added to warmed water. This was rounded with hands and spread thin, an appropriate amount of commercially available bean jam was incrusted with it, and this was trimmed to round, and steamed with a steamer from which steam was being emitted, for about 10 minutes. When cooled, the mannooligosaccharide-containing edible composition was scatted on a whole surface to produce a coconut white ball-like cake. Thereby, any person can ingest mannooligosaccharides simply and effectively.

### (Example 7)

The mannooligosaccharide-containing edible composition (2.5 g), 200 cc of cow milk, 100 cc of raw cream, 200 cc of coconut milk, and 90 g of sugar were mixed, and heated at 80°C. Thereafter, 7 g of gelatin was added, thoroughly mixed, and sufficiently dissolved. This was cooled with water to remove crude heat, poured into a serving dish, and solidified in a refrigerator for 3 hours, thereby, a pudding rich in a coconut flavor, containing mannooligosaccharides, could be prepared.

## Claims

1. A method for producing a mannooligosaccharide-containing edible composition comprising taking endosperm out of coconut fruit, grinding the endosperm to prepare slurry, subjecting the slurry to solid-liquid separation to obtain solid matter, and then either(1)defatting the solid matter until the fat and oil content becomes 1% by weight or less, and reacting the defatted solid matter with a mannan-degrading enzyme so as to hydrolyze mannan contained therein; or (2) reacting the solid matter with a mannan-degrading enzyme which does not have a lipase activity so as to hydrolyze mannan contained therein,
wherein an edible composition is obtained without particular separation and purification of a mannooligosaccharide, and
wherein, the mannooligosaccharide-containing edible composition comprises mannobiose in an amount of 10% by weight or more.

## Patentansprüche

1. Verfahren zur Herstellung einer Mannooligosaccharidhaltigen essbaren Zusammensetzung, umfassend das Herausnehmen des Endosperms aus Kokosnussfrucht, Mahlen des Endosperms, um eine Aufschlämmung herzustellen, Unterziehen der Aufschlämmung unter eine Fest-Flüssig-Trennung, um festes Material zu enthalten, und dann entweder (1) Entfetten des festen Materials, bis der Fett- und Ölgehalt 1 Gew.% oder weniger beträgt, und Umsetzen des entfetteten festen Materials mit einem Mannan-abbauenden Enzym, um so das hierin enthaltene Mannan zu hydrolysieren; oder (2) Umsetzen des festen Materials mit einem Mannan-abbauenden Enzym, welches keine Lipaseaktivität aufweist, um so das hierin enthaltende Mannan zu hydrolysieren,
worin eine essbare Zusammensetzung ohne eine besondere Abtrennung und Reinigung eines Mannooligosaccharids erhalten wird, und
worin die Mannooligosaccharid-haltige essbare Zusammensetzung Mannobiose in einer Menge von 10 Gew.% oder mehr umfasst.

## Revendications

1. Procédé de production d'une composition comestible contenant un mano-oligosaccharide comprenant l'extraction d'un endosperme de noix de coco, le broyage de l'endosperme pour préparer une pâte, la séparation solide-liquide de la pâte pour obtenir une matière solide, puis soit (1) le dégraissage de la matière solide jusqu'à ce que la teneur en graisse et en huile soit inférieure ou égale à 1 % en poids, et la réaction de la matière solide dégraissée avec une enzyme dégradant le mannane de manière à hydrolyser le mannane y étant contenu ; soit (2) la réaction de la matière solide avec une enzyme dégradant le mannane qui ne présente pas d'activité lipasique de manière à hydrolyser le mannane y étant contenu,
dans lequel une composition comestible est obtenue sans séparation et purification particulières d'un mano-oligosaccharide, et
dans lequel la composition comestible contenant un manooligosaccharide comprend du mannobiose en une quantité supérieure ou égale à 10 % en poids.
